# EUROPEAN PATENT APPLICATION

(11) **EP 1 855 198 A1**
(43) Date of publication of application: **14.11.2007**
(21) Application number: 06300462.6
(22) Date of filing: 12.05.2006
(51) Int. Cl.: G06F 9/445

(54) **Method for automatically integrating and configuring a new application program**

(71) Applicant: Alcatel, 75008 Paris (FR)
(72) Inventor: Pinault, Francis, 92270 Bois-Colombes (FR)
(74) Representative: Sciaux, Edmond

(57) **Abstract**

Method for automatically integrating and configuring a new application program into at least one e-mail application program already installed respectively in at least one of a plurality of computers comprising the steps of:
- providing (2) a list of e-mail addresses of users of said plurality of computers,
- determining the characteristics of the e-mail application program,
- creating (7) and sending (8) a second e-mail message comprising an upgrading executable program based (6) on characteristics so determined,
- running (9) said upgrading executable program on each of said plurality of computers.

## Description

The technical domain of the invention is the domain of integration and configuration of application programs.

More particularly, the invention concerns a method for automatically integrating and configuring a new application program into at least one e-mail application program.

When the applicant, who manufactures network and telephonic systems, wants to sell a new application program on top of his systems, he has to convince the customer that the integration and configuration of this new application program will not induce considerable work for the administrator. The problem arises from the fact that the new application program must connect to existing e-mail application programs or application program suites as e.g. Microsoft Outlook or IBM Lotus Domino, and that these application programs are installed in a plurality of separate computers.

Until now, the administrator generally had to configure himself the user accounts corresponding to this new application. This was most often done with a procedure of login/password. The administrator also has to build a standard configuration of the new application that is personalized after by the users themselves. At the end a procedure is sent by e-mail to each user. Each user must carefully read this procedure and make all the integration stages appropriate to his configuration in his e-mails application as described in the procedure.

This can be very complex because of the multiplicity of the e-mail application programs and especially regarding their version. Such a way of doing induces an increase of work for both the administrator and the users. Very often, the administrator must be trained to be ready to answer any question on the application's installation that may come from the users.

Another way of proceeding to integration of a new application is to incorporate the new application as part of the existing application or applications suite. This can be done with a new delivery of the existing application package.

A major drawback of a new delivery or new version is that a whole integration and validation stage is needed. Such a validation and qualification phase of the new package is cost consuming. Moreover, such a delivery implies the new application to be provided by either the same company or at least by a company linked with commercial relationship to the owner of the application package.

So there is a need to provide an easy integration method of a new application program. The present invention addresses and solves this problem without the drawbacks of the prior art.

The object of the invention is a method for automatically integrating and configuring a new application program into at least one e-mail application program already installed respectively in at least one in a plurality of computers comprising the steps of:
- providing a list of e-mail addresses of users of said plurality of computers,
- determining the characteristics of the e-mail application program used by said user,
- building an upgrading executable program adapted to each said e-mail application program used by said user based on said characteristics of the e-mail application program so determined,
- creating a second e-mail message comprising said built upgrading executable program,
- sending said second e-mail message to the corresponding user,
- running said upgrading executable program in each of said plurality of computers.

According to a first embodiment of the invention, said determining step comprises the steps of:
- creating a first e-mail message requesting a response from the user,
- sending said first e-mail message to each of said users,
- analysing the response e-mail message sent by each user to determine said characteristics of the e-mail application program used by said user.

This method advantageously uses and analyses the response given by an end user to a first requesting e-mail to determine the characteristics of its e-mail application program (identity, version). These characteristics are then used to build a personalized upgrading executable program.

According to a second alternate embodiment of the invention, said determining step comprises receiving said characteristics of the e-mail application program used by said user from an administrator.

According to another feature of the invention, the list of the e-mail addresses of said users is automatically derived from a list of said users using a company rule.

According to another feature of the invention, the upgrading executable program has the task of integrating said new application program into the e-mail application program already installed in the computer of said user.

According to another feature of the invention, the running step is automatically started by the opening of said second e-mail message by said user.

According to another feature of the invention, said second e-mail message further comprises running instructions and the running step is started by said user.

According to another feature of the invention, the second e-mail message further comprises a login and a password.

According to another feature of the invention, in case an error occurs in one of the previous steps a fault report is generated and sent to a supervision centre.

Others features, details and advantages of the invention will become more apparent from the detailed illustrating description given hereafter with respect to the drawing on which:

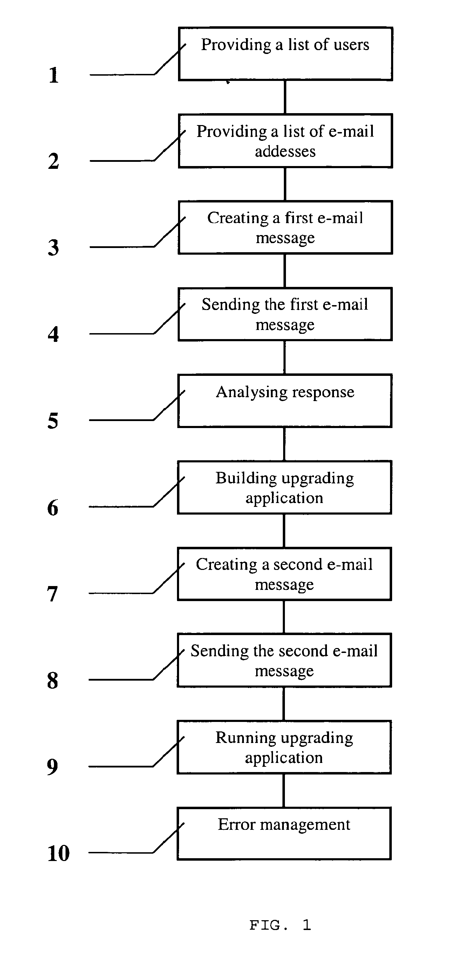

- Figure 1 is a flow-chart diagram of the method according to the invention.

The invention concerns a method for automatically integrating and configuring a new application program into at least one e-mail application program already installed respectively in at least one of a plurality of computers. The already installed application is an e-mail application or an application suite comprising an e-mail application. An example of such an application suite is Microsoft Outlook or IBM Lotus Domino. The aim of the method is to ease the work of an administrator when integrating and configuring a new application. Such a new application is an application program that needs to interact with the already installed e-mail application. Such a new application is for example a telephone application that needs for example to gain access to the e-mail address data base of the user. The addition of the new application to the already installed e-mail application may need to get some characteristics of said e-mail application in order to properly install and integrate with the existing e-mail application of each user. These characteristics may be the identity of the e-mail application or suite and/or its version.

The determination of said characteristics is an important step of the invention. At least two alternate embodiments may be used to proceed to that determining step.

A first embodiment to determine said characteristics uses an analysis 5 of an e-mail message received from the user. To get such an e-mail message, the method proceeds by creating 3 a first e-mail message and sending 4 it to the user. This e-mail message contains a request for a response from the user. This first e-mail message is a standard one and can be the same for all users. It can also be slightly personalized in that it comprises the name of the receiving user. This first e-mail message may also contain a description of the new application program and of the new features it adds to the existing application.

In order to send said first e-mail message to all users intended to be upgraded with the new application, a list of e-mail addresses of these users has to be provided 2. The administrator may provide 2 such a list.

When receiving an e-mail message from one of the users in response to said first e-mail requesting message, an analysis 5 of said e-mail response allows the extraction of said characteristics of the e-mail application program used by said user.

According to a second embodiment of the invention, determining step may instead be done by directly receives from an administrator who can provide them said characteristics of the e-mail application program used by said user.

Knowing the characteristics of the e-mail application program of a user, it is possible to build 6 an upgrading executable program adapted to the e-mail application program used by that user. Such an upgrading executable program is then sent 8 by e-mail to the said user.

For that purpose, a second e-mail is created 7 comprising the said upgrading executable program, directed to the e-mail address of said user. This second e-mail message is more personalized than the first e-mail message in that it comprises an upgrading executable program dedicated to the (e-mail application program of the) receiving user. After its creation 7 said second e-mail message is then send 8 to the user.

The dispatching of the new application is over when all the second e-mail messages have been sent 8. The integration method ends with a step of running 9 said upgrading executable programs in each of said plurality of computers.

It has to be point out that, despite the first step of providing 2 a list of e-mail addresses, all the preceding steps may be realized either manually by an administrator or automatically by an integration program.

As an alternative of the providing 2 of a list of e-mail addresses, it is possible to provide 1 a simple list of name of the users. In most company, a "company rule" for deriving the e-mail address from the name and/or surname is used. For example the e-mail address may be built with the following paradigm <name><first letter of surname>@<society name>.com. Knowing this paradigm it is possible to automatically derive a list of e-mail addresses from a simple list of names and surnames. In this case, the administrator only provides 1 the paradigm and a list of users comprising their names and/or surnames.

The personalized executable program has the task of integrating said new application program into the e-mail application program already installed in the computer of said user. Such a feature and the way it can be achieved are well known by the ones skilled in the art.

The running step 9 may be automatically started by the opening of said second e-mail message by said user.

Alternatively the running 9 of the upgrading application may be manually started by the user after he has received it in the second e-mail message. In such a case the second e-mail message may advantageously comprise running instructions to help the user to proceed.

In case the new application needs a login and password for the user to access it, these personalized login and password may be joined in said second e-mail.

In case of error in a stage of the previously described method, a fault report may be generated 10 and sent to a supervision centre, may be it the one of the customer, distributor or of the vendor.

## Claims

1. Method for automatically integrating and configuring a new application program into at least one e-mail application program already installed respectively in at least one of a plurality of computers ***characterized in that*** it comprises the steps of:
- providing (2) a list of e-mail addresses of users of said plurality of computers,
- determining the characteristics of the e-mail application program used by said user,
- building (6) an upgrading executable program adapted to each said e-mail application program used by said user based on said characteristics of the e-mail application program so determined,
- creating (7) a second e-mail message comprising said built upgrading executable program,
- sending (8) said second e-mail message to the corresponding user,
- running (9) said upgrading executable program in each of said plurality of computers.

2. Method according to claim 1 wherein said determining step comprises the steps of:
- creating (3) a first e-mail message requesting a response from the user,
- sending (4) said first e-mail message to each of said users,
- analysing (5) the response e-mail message sent by each user to determine said characteristics of the e-mail application program used by said user.

3. Method according to claim 1 wherein said determining step comprises receiving said characteristics of the e-mail application program used by said user from an administrator.

4. Method according to anyone of claims 1 to 3 wherein said list of the e-mail addresses of said users is automatically derived from a list of said users using a company rule.

5. Method according to anyone of claims 1 to 4 wherein said upgrading executable program has the task of integrating said new application program into the e-mail application program already installed in the computer of said user.

6. Method according to anyone of claims 1 to 5 wherein the running step (9) is automatically started by the opening of said second e-mail message by said user.

7. Method according to anyone of claims 1 to 6 wherein said second e-mail message further comprises running instructions and the running step (9) is started by said user.

8. Method according to anyone of claims 1 to 7 wherein the second e-mail message further comprises a login and a password.

9. Method according to anyone of claims 1 to 8 where in case an error occurs in one of the previous steps a fault report is generated (10) and sent to a supervision centre.
